**Europäisches Patentamt**

**European Patent Office**

**Office européen des brevets**

(19)

(11)  **EP 1 503 227 A1**

(12)  **EUROPÄISCHE PATENTANMELDUNG**

(43) Veröffentlichungstag:
02.02.2005   Patentblatt 2005/05

(51) Int Cl.7: **G02B 1/11**

(21) Anmeldenummer: 04016082.2

(22) Anmeldetag: 08.07.2004

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **01.08.2003  DE 10336041**

(71) Anmelder: **Merck Patent GmbH
64293 Darmstadt (DE)**

(72) Erfinder:
• **Kursawe, Monika, Dr.
64342 Seeheim-Jugenheim (DE)**
• **Boehm, Edgar
13 FN01 Peitou Taipei (TW)**
• **Hsu, Peter (Fangyun)
252, Panchiou Taipei (TW)**

(54)  **Optisches Schichtsystem mit Antireflexeigenschaften**

(57)    Die Erfindung betrifft ein optisches Schichtsystem mit Antireflexeigenschaften, wobei sich auf mindestens einer Oberfläche eines transparenten flächigen Substrates ein Schichtpaket aus einer ersten Schicht mit einer Brechzahl in Bereich von 1,20 bis 1,37 und einer zweiten glatten Schicht mit einer Brechzahl von 1,40 bis 1,48 befindet, ein Verfahren zu dessen Herstellung und dessen Verwendung.

## Figur 1

**EP 1 503 227 A1**

**Beschreibung**

Die vorliegende Erfindung betrifft optische Schichtsysteme mit Antireflexeigenschaften, welche mehrere Schichten auf einem optisch transparenten Substrat umfassen und insbesondere vorteilhaft in Anzeigevorrichtungen wie Flüssigkristall-Displays für Computer- und Fernsehbildschirme oder in berührungsempfindlichen Anzeigevorrichtungen, wie den so genannten Touch Panels oder Touch Screens, aber auch zur Brechzahlmodifizierung von transparenten elektrisch leitfähigen Schichten, beispielsweise für Index-Matched Indium-Tin-Oxide (IMITO)-Schichten sowie für Fensterscheiben, transparente Glas- und Gebäudeteile, Vitrinenverglasungen oder optische Linsen eingesetzt werden können, ein Verfahren zu ihrer Herstellung sowie ihre Verwendung.

Optische Schichtsysteme auf transparenten Substraten, welche die Transmission von Licht durch die Substrate erhöhen sollen, sind seit langer Zeit bekannt.

So ist es beispielsweise üblich, mehrere Interferenzschichten mit abwechselnd hohen und niedrigen Brechzahlen übereinander auf ein Substrat aufzubringen. In einem bestimmten Wellenlängenbereich kommt es dadurch zu einer nahezu vollständigen Auslöschung der reflektierten Wellen.

Solche Mehrfachschichten, die beispielsweise in H.K. Pulker, Coatings on glass, Thin films science and technology, 6 (1984), Seiten 401-405, beschrieben sind, werden in der Regel über Verdampfungsverfahren wie Sputtern, CVD (Chemical Vapour Deposition) oder PVD (Physical Vapour Deposition) auf das Substrat aufgebracht. Es sind jedoch auch Mehrfachschichtsysteme bekannt, bei denen die Schichten nasschemisch aus über Sol-Gel-Verfahren hergestellten Lösungen aufgebracht werden.

Mehrfachschichtsysteme sind nur sehr aufwändig herstellbar und weisen darüber hinaus mechanische Eigenspannungen im System auf, die über gesonderte Maßnahmen ausgeglichen werden müssen, wenn ein spannungsfreies System erhalten werden soll. Außerdem zeigen die Transmissionskurven von Mehrschichtsystemen in der Regel eine mehr oder weniger ausgeprägte "V" oder "W"-Form. Dies resultiert in einer Restfarbe des Systems, die meist nicht gewünscht ist. Es werden bevorzugt Antireflexbeschichtungen nachgefragt, welche eine Transmissionskurve mit einer gleichmäßig hohen Transmission über einen breiten Wellenlängenbereich aufweisen.

Weiterhin ist es bekannt, transparente Substrate zur Erzielung einer Antireflexwirkung mit einer Einfachbeschichtung zu versehen. In diesem Fall wird auf dem Substrat eine so genannte $\lambda/4$-Schicht aufgebracht, d.h. eine Schicht mit der optischen Dicke $\lambda/4$ ($\lambda$ = Wellenlänge des eingestrahlten Lichtes), wobei die Brechzahl n der Antireflexschicht im Idealfalle der Bedingung n = $\sqrt{n(\text{Luft}) \cdot n(\text{Substrat})}$ genügen sollte.

In diesem Falle löschen sich die Amplituden der reflektierten Wellenlängen aus. Wird beispielsweise eisenarmes Glas mit einer Brechzahl n= 1,5 eingesetzt, ergibt sich für die Antireflexschicht eine optimale Brechzahl von 1,22. In diesem Falle nimmt die Reflexion der elektromagnetischen Strahlung mit der Wellenlänge $\lambda$ den Wert Null an.

Als Einfachbeschichtungen werden hauptsächlich über verschiedene Aufdampfverfahren hergestellte $MgF_2$-Schichten verwendet. Eine solche, in einer Dicke von $\lambda/4$ aufgebrachte Schicht besitzt gewöhnlich eine Brechzahl von 1,38. Damit ergibt sich im Reflexionsminimum eine Restreflexion von deutlich mehr als 1 %. Ein dichtes, haltbares Material mit einer Brechzahl kleiner als 1.38 ist nicht bekannt.

Weiterhin sind inzwischen poröse haltbare Schichten erhältlich, die eine Brechzahl von kleiner als 1,38 besitzen und damit die Restreflexion des beschichteten Substrates minimieren können. Solche porösen Schichten können durch Ätzen von Glas, das Aufbringen einer porösen Schicht auf Glas oder eine Kombination aus poröser Schicht und Ätzvorgang erhalten werden.

Bedingt abriebstabile poröse Schichten können beispielsweise mit Verfahren zur Abscheidung von porösen optischen Schichten aus Metalloxidsolen erhalten werden, wie sie in der DE 198 28 231 oder in DE 100 51 725 beschrieben sind.

Aus WO 00/10934 ist ein Verfahren zur Herstellung eines Schichtsystems mit einer porösen Antireflexschicht bekannt, bei welchem ein Substrat, welches mit einer porösen Schicht versehen ist, anschließend mit einer Beschichtungslösung behandelt wird, die aus mindestens einem Metalloxidsol und mindestens einem Tetra ($C_1$-$C_4$)alkyl-orthosilikat im Gewichtsverhältnis 1: 1 bis 9:1 besteht, welche die Reflexionswerte der porösen Antireflexschicht nicht wesentlich beeinträchtigt. Die Brechzahl der einzelnen Schichten in diesem System ist nicht offenbart. Die nachträglich aufgebrachte Schutzschicht, welche die Haltbarkeit der porösen Schicht verbessern soll, weist bedingt durch die Partikelgröße des aufgebrachten Sols von vorzugsweise 20 nm eine raue Oberfläche auf.

Abriebfeste $SiO_2$-Antireflexschichten mit hoher Lichttransmission können gemäß WO 03/027015 durch Verwendung eines Hybridsoles, welches $[SiO_x(OH)_y]_n$ -Partikel mit 0<y<4 und 0<x<2, enthält, die ein Gemisch aus einer Partikelfraktion mit einer Teilchengröße von 4-15 nm und einer zweiten Partikelfraktion mit einer mittleren Teilchengröße von 20-60 nm in einem wasserhaltigen Lösemittel umfassen, wobei das Hybridsol in einem besonderen Stufenverfahren hergestellt wird, erhalten werden. Damit lassen sich auf Glas abriebfeste, optisch transparente $SiO_2$-Schichten mit Brechzahlen zwischen 1,20 und 1,40 herstellen.

Der Einsatz solcher poröser Antireflexschichten ist, beispielsweise durch ihre raue Oberfläche, jedoch nicht in allen Bereichen uneingeschränkt möglich, in denen Antireflexschichten zum Einsatz kommen sollen.

Antireflexeigenschaften bei Displays sind sehr erwünscht, um dem Benutzer unter jedem Betrachtungswinkel eine ungestörte Sicht zu ermöglichen. Von besonderer Bedeutung sind gute Antireflexeigenschaften bei den in den letzten Jahren immer häufiger zum Einsatz kommenden berührungsempfindlichen Displays, so genannten Touch Screens oder Touch Panels, die durch ihre benutzerfreundliche Bedienungsweise oft in Parkschein- und Fahrkartenautomaten oder in Taschencomputern Verwendung finden oder beispielsweise in Informations- oder Kundenterminals in Banken und in anderen häufig durch Besucher frequentierten Institutionen zum Einsatz kommen.

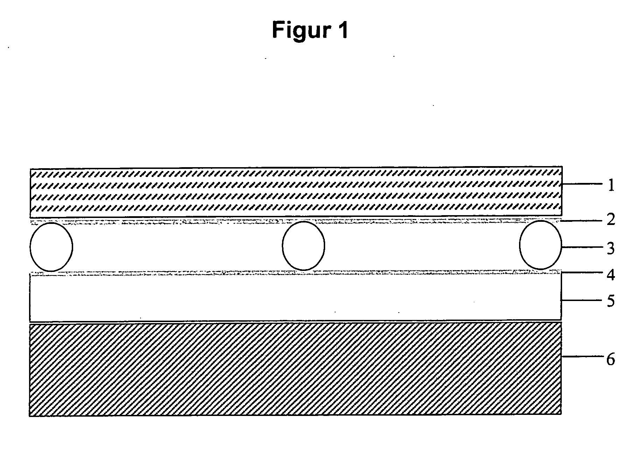

Ein schematischer Aufbau eines Touch Panels ist in Figur 1 dargestellt. Ein Touch Panel kann einen mechanischen Druck auf eine bestimmte Position des Bildschirmes digital erfassen. Zu diesem Zwecke befindet sich auf einer Flüssigkristallzelle (6) in der Regel ein stabiles unflexibles Substrat (5), welches meist aus Glas besteht und eine transparente elektrisch leitfähige Schicht (4) aufweist. Über Abstandshalter (3) ist dieser Schichtaufbau mit einer transparenten, druckempfindlichen flexiblen Schicht (1), üblicherweise einer Kunststofffolie, verbunden, welche ebenfalls mit einer transparenten elektrisch leitfähigen Schicht (2) versehen ist. Dabei sind die Schichten so angeordnet, dass die elektrisch leitfähigen Schichten nur durch die Abstandshalter getrennt sind. Wird an einem Punkt der druckempfindlichen Schicht ein Druck mittels eines Fingers, Stiftes o.ä. ausgeübt, so kommen die leitenden Schichten miteinander in Kontakt. Die Position dieses Kontaktes wird über eine in einer der elektrisch leitfähigen Schichten angelegte Spannung und den durch die Berührung erzeugten linearen Spannungsabfall ermittelt.

Beim Durchtritt von Licht durch das Display-Glas kommt es an den Oberflächen der Glasplatte zu Reflexionen, die sich aus den Unterschieden der Brechzahlen der verschiedenen Materialien ergeben. Diese Reflexionen wirken sich insbesondere dann störend aus, wenn der Bildschirm aus flachen Winkeln betrachtet wird.

Es hat nicht an Versuchen gefehlt, diese unerwünschten Reflexionen durch das Aufbringen von Antireflexschichten, welche wahlweise zwischen dem unflexiblen Träger und der darauf befindlichen elektrisch leitfähigen Schicht oder zwischen der flexiblen Schicht und der darauf befindlichen elektrisch leitfähigen Schicht, oder in beiden Systemen, angeordnet sind, zu vermindern. Dabei kann die Lage der Antireflexschichten innerhalb des Systems auch variiert werden.

So zeigt beispielsweise US 6,512, 512 B1 ein Touch Panel mit verbesserten optischen Eigenschaften, welches an jeder der Grenzflächen, die innerhalb des Mehrschichtaufbaus des Panels mit Luft in Berührung kommen, jeweils eine Antireflexbeschichtung aufweist. Diese besteht aus aufgedampften Schichten aus $SiO_2$

oder $MgF_2$. Auf Grund der mit diesen Materialien erzielbaren Brechzahlen von 1,46 bzw. 1,38 können damit aber nur unbefriedigende Resultate hinsichtlich des Antireflexverhaltens erzielt werden. Außerdem muß mindestens eine dieser Schichten, die sich zwischen den beiden leitfähigen Schichten befindet, über Ätzverfahren mit Öffnungen versehen werden, da ansonsten kein elektrischer Kontakt zustande käme.

In WO 03/045865 wird ein Schichtsystem aus einer Glasplatte und einer elektrisch leitfähigen Schicht mittels einer mehrlagigen Beschichtung aus einer Titan/Praseodymoxid-Schicht, einer $MgF_2$-Schicht, einer weiteren Titan/Praseodymoxidschicht, einer Indium-Zinn-Oxid-(ITO)Schicht und einer weiteren $MgF_2$-Schicht auf dem Glas mit Antireflexeigenschaften versehen. Dieses Schichtsystem ist nur über ein sehr aufwändiges Verfahren erhältlich, welches entsprechend kostenintensiv ist und hohe verfahrenstechnische Anforderungen stellt.

In JP-A-08-195138 wird ein Touch Panel beschrieben, welches transparente leitfähige Schichten aus Indium-Zinn-Oxid enthält, die entweder einoder beidseitig mit Antireflexschichten beschichtet sind, die eine Brechzahl von 1,2 bis 1,5 sowie eine Schichtdicke von 0,2 bis 0,8 µm aufweisen. Dieses Schichtsystem befindet sich wahlweise auf dem flexiblen oder dem unflexiblen Substrat und kann ebenso auf beiden vorhanden sein. Mit Hilfe dieses Schichtaufbaus soll insbesondere bei gekrümmten Substraten die Bildung von Newtonschen Ringen verhindert werden.

Aus JP-A-07-257945 ist ein Touch Panel bekannt, bei dem eine transparente elektrisch leitfähige Schicht ein- oder beidseitig mit einer Antireflexschicht versehen wird, die eine Brechzahl von ≤ 1,6 aufweist. Mit beidseitig aufgebrachten $SiO_2$-Schichten in einer Dicke von 1100 Angström und mit einer Brechzahl von 1,46 kann damit in einem Beispiel eine Lichtdurchlässigkeit von 95,1% bei 550 nm Wellenlänge erhalten werden.

Für qualitativ hochwertige Touch Panels, insbesondere in Kombination mit den neu entwickelten hoch auflösenden farbigen Flat Panel Displays, ist bei der Verwendung von Glassubstraten eine durch Antireflexschichten erhöhte Lichtdurchlässigkeit (Transparenz) von mindestens 2 und bevorzugt 3% pro Grenzfläche des Glases erforderlich. Daraus ergibt sich bei der üblichen beidseitigen Beschichtung des Glassubstrates, welches in der Regel über eine Transparenz von 92% verfügt, eine Anforderung bezüglich der Transparenz von mindestens 96% (über den sichtbaren Bereich des Spektrums integriert und gewichtet). Die bei der Antireflexbeschichtung von Glassubstraten eingesetzten porösen Schichten können auf das in Touch Panels vorhandene Schichtsystem aus einem Substrat und einer elektrisch leitfähigen transparenten Schicht nicht ohne weiteres übertragen werden, da die optischen Eigenschaften der elektrisch leitfähigen Schicht ebenfalls zu berücksichtigen sind. Außerdem sind poröse Schichten, die aus dem üblicherweise eingesetzten $SiO_2$ bestehen, nicht laugenbeständig, was beim üblichen Herstellungsverfahren von Touch Panels zu Problemen führen kann. Ein weiterer Nachteil poröser Schichten liegt darin, dass diese, wenn sie in unmittelbarer Nachbarschaft zur elektrisch leitfähigen transparenten Schicht aufgebracht sind, die elektrische Leitfähigkeit und damit den elektrischen Schichtwiderstand dieser Schicht durch ihre herstellungsbedingt raue Oberfläche nachteilig beeinflussen. Dadurch kann es zu Übertragungsfehlern bei der Signalortung kommen.

Die Aufgabe der vorliegenden Erfindung besteht daher darin, ein optisches Schichtsystem mit Antireflexeigenschaften auf einem flächigen transparenten Substrat zur Verfügung zu stellen, welches auch bei einer auf dem Substrat noch zusätzlich aufzubringenden transparenten elektrisch leitfähigen Schicht hervorragende Transmissionswerte erzielt, eine glatte Oberfläche aufweist, die in Kombination mit einer darauf befindlichen transparenten elektrisch leitfähigen Schicht zu einem gleichmäßigen Schichtwiderstand bei dieser führt, welches säure- und alkalienbeständig und mechanisch stabil ist, aus einer geringstmöglichen Anzahl von Schichten besteht und über ein einfaches Verfahren kostengünstig herstellbar ist.

Die Aufgabe der Erfindung wird mittels eines optischen Schichtsystems mit Antireflexeigenschaften, welches ein transparentes flächiges Substrat mit zwei im wesentlichen parallel zueinander liegenden Oberflächen umfaßt und auf mindestens einer dieser Oberflächen ein Schichtpaket aus einer

- ersten Schicht mit einer Brechzahl im Bereich von 1,20 bis 1,37 auf der Substratoberfläche und
- einer zweiten glatten Schicht mit einer Brechzahl von 1,40 bis 1,48 auf der ersten Schicht

aufweist, gelöst.

Des weiteren wird die Aufgabe der Erfindung durch ein Verfahren zur Herstellung eines optischen Schichtsystems gelöst, wobei

a) ein flächiges Substrat, welches zwei im wesentlichen parallel zueinander liegende Oberflächen aufweist, auf mindestens einer der Oberflächen mit einer Schicht mit einer Brechzahl im Bereich von 1,20 bis 1,37 beschichtet und

b) diese Schicht mit einer glatten Schicht mit einer Brechzahl im Bereich von 1,40 bis 1,48 beschichtet wird.

Die Aufgabe der Erfindung wird außerdem durch die Verwendung des vorab beschriebenen optischen Schichtsystems für die Herstellung von antireflex-beschichteten Gläsern und Kunststoffen für Fensterscheiben, transparente Gebäude- und Fahrzeugteile, Vitrinenverglasungen, optische Linsen, Displays, berührungsempfindliche Displays sowie für brechzahlmodifizierte transparente elektrisch leitfähige Schichten gelöst.

Gegenstand der Erfindung sind weiterhin antireflex-beschichtete Gläser und Kunststoffe für Fensterscheiben, transparente Gebäude- und Fahrzeugteile, Vitrinenverglasungen, optische Linsen, Displays, berührungsempfindliche Displays sowie brechzahlmodifizierte transparente elektrisch leitfähige Schichten, welche die vorab beschriebenen optischen Schichtsysteme enthalten.

Das erfindungsgemäße optische Schichtsystem besteht aus einem transparenten flächigen Substrat mit zwei im wesentlichen parallel zueinander liegenden Oberflächen und weist auf mindestens einer dieser Oberflächen ein Schichtpaket aus einer ersten Schicht mit einer Brechzahl im Bereich von 1,20 bis 1,37 auf der Substratoberfläche und einer zweiten glatten Schicht mit einer Brechzahl von 1,40 bis 1,48 auf der ersten Schicht auf.

Als Substrate für das optische Schichtsystem gemäß der vorliegenden Erfindung eignen sich alle bekannten flächigen und in einem breiten Bereich, insbesondere im sichtbaren Bereich, des Sonnenspektrums transparenten Substrate, die im allgemeinen zur Herstellung optischer Schichtsysteme Verwendung finden. Diese flächigen Substrate weisen zwei im wesentlichen parallel zueinander liegende Oberflächen auf, d.h. es handelt sich um schichtförmiges Material wie Scheiben, Platten, Folien und dergleichen, welche über eine im wesentlichen gleichmäßige Dicke verfügen. Dabei kann das flächige Substrat als solches verformt oder gekrümmt sein.

Die Substrate für das optische Schichtsystem gemäß der vorliegenden Erfindung sind flexibel oder unflexibel, d.h. starr oder biegsam, weisen jedoch eine Schichtdicke auf, die eine für die gängigen Beschichtungsverfahren ausreichende Steifigkeit ermöglicht.

Die Substrate bestehen insbesondere aus flexiblem oder unflexiblem Glas oder aus flexiblem oder unflexiblem Kunststoff. Als Glasmaterialien werden insbesondere Borosilikatglas, Natronkalkglas, Quartzglas und bevorzugt das so genannte Floatglas eingesetzt. Als Kunststoffe können beispielsweise Polyethylenterephthalat (PET), Polyester (z.B. MYLAR D® von Dypont), Polycarbonate (z.B. G.E. LEXAN®) oder Polyethylen eingesetzt werden.

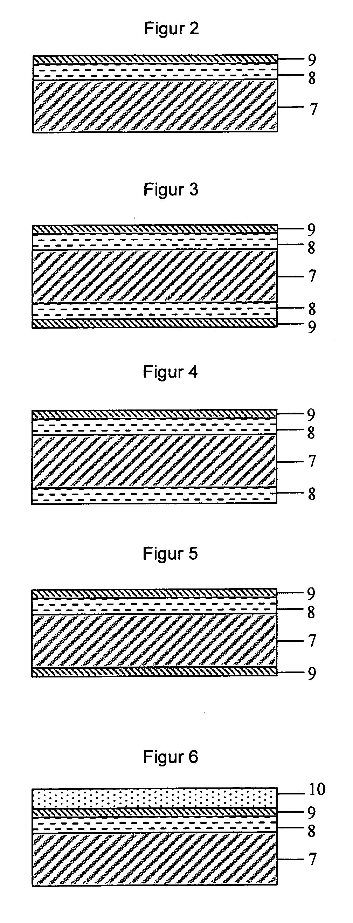

Die einfachste Ausführungsform der Erfindung ist in Figur 2 dargestellt. Auf mindestens einer Oberfläche des Substrates (7) befindet sich ein Schichtpaket aus einer ersten Schicht mit einer Brechzahl im Bereich von 1,20 bis 1,37 (8) direkt auf der Oberfläche des Substrates und einer zweiten glatten Schicht mit einer Brechzahl im Bereich von 1,40 bis 1,48 (9) auf der ersten Schicht.

Dieses Schichtpaket kann sich wahlweise auch auf beiden Oberflächen des flächigen Substrates befinden. Diese Ausführungsform ist in Figur 3 dargestellt. Dabei bedeuten gleiche Ziffern jeweils gleichartige Schichten.

Diese weisen die beschriebenen Eigenschaften auf, können sich jedoch aus verschiedenen Materialien zusammensetzen.

Es ist jedoch ebenso möglich, dass das oben genannte Schichtpaket aus den Schichten (8) und (9) nur auf einer Oberfläche des flächigen Substrates vorhanden ist, während sich auf der gegenüber liegenden Oberfläche des Substrates nur ein Teil des Schichtpaketes befindet, also entweder nur eine Schicht mit einer Brechzahl im Bereich von 1,20 bis 1,37 (8) direkt auf der Oberfläche des Substrates oder aber eine glatte Schicht mit einer Brechzahl im Bereich von 1,40 bis 1,48 (9) direkt auf der Oberfläche des Substrates. Diese Ausführungsformen sind in den Figuren 4 und 5 dargestellt.

Auf den vorab beschriebenen optischen Schichtsystemen können noch weitere Schichten aufgebracht sein, wobei es sich insbesondere um zusätzlich aufgebrachte transparente elektrisch leitfähige Schichten handelt.

Diese transparenten elektrisch leitfähigen Schichten sind an sich bekannt und enthalten Materialien wie Indiumoxid (IO), Indium-Zinn-Oxid (ITO), Antimon-dotiertes Zinnoxid (ATO), Fluor-dotiertes Zinnoxid (FTO), Zinkoxid (ZO), Indium-dotiertes Zinkoxid (IZO), Cadmiumstannat (CTO) Aluminiumdotiertes Zinkoxid (Al:ZnO) oder Mischungen hieraus. Besonders bevorzugt enthält die elektrisch leitfähige Schicht Indium-Zinn-Oxid (ITO).

In einer weiteren Ausführungsform, welche in Figur 6 abgebildet ist, befindet sich eine transparente elektrisch leitfähige Schicht (10) direkt auf der oberen Schicht des vorab beschriebenen Schichtsystems, nämlich der glatten Schicht mit einer Brechzahl im Bereich von 1,40 bis 1,48 (9).

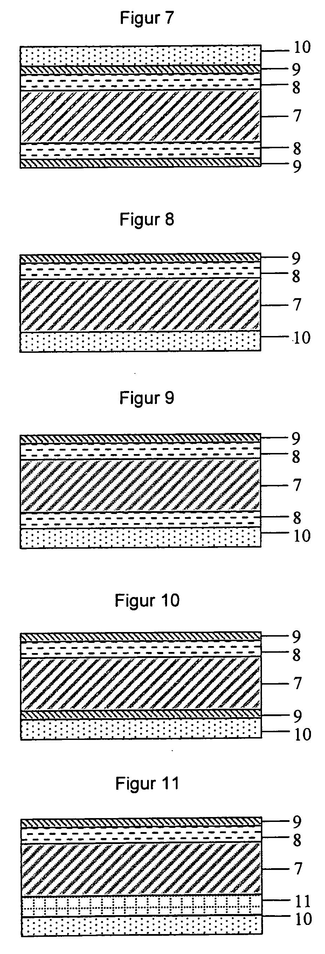

Dabei ist es vorteilhaft, wenn sich außerdem auf der gegenüber liegenden Substratoberfläche das Schichtpaket aus den vorab beschriebenen Schichten mit einer Brechzahl im Bereich von 1,20 bis 1,37 (8) und einer Brechzahl im Bereich von 1,40 bis 1,48 (9) befindet (siehe Figur 7).

Es ist jedoch auch eine Ausführungsform möglich, bei welcher sich auf der einen Oberfläche des flächigen Substrates (7) ein Schichtpaket aus einer ersten Schicht mit einer Brechzahl im Bereich von 1,20 bis 1,37 (8) direkt auf der Oberfläche des Substrates und einer zweiten glatten Schicht mit einer Brechzahl im Bereich von 1,40 bis 1,48 (9) auf der ersten Schicht befindet, während auf der gegenüber liegenden Oberfläche eine transparente elektrisch leitfähige Schicht (10) vorhanden ist, welche ebenfalls aus den oben angeführten Materialien zusammengesetzt sein kann. Diese Ausführungsform ist in Figur 8 dargestellt.

Zwei zusätzliche Ausführungsformen (siehe Figuren 9 und 10) setzen sich aus einem flächigen Substrat (7) zusammen, welches auf der einen Oberfläche jeweils ein Schichtpaket aus einer ersten Schicht mit einer Brechzahl im Bereich von 1,20 bis 1,37 (8) direkt auf der Oberfläche des Substrates und einer zweiten glatten Schicht mit einer Brechzahl im Bereich von 1,40 bis 1,48 (9) auf der ersten Schicht aufweisen, während sich auf der gegenüberliegenden Oberfläche des Substrates entweder eine Schicht mit einer Brechzahl im Bereich von 1,20 bis 1,37 (8) oder eine glatte Schicht mit einer Brechzahl im Bereich von 1,40 bis 1,48 (9) sowie eine darauf aufgebrachte transparente elektrisch leitfähige Schicht (10) befindet. Dabei ist die Variante bevorzugt, in welcher sich auf der zweiten Substratoberfläche eine glatte Schicht mit einer Brechzahl im Bereich von 1,40 bis 1,48 (9) sowie eine darauf aufgebrachte transparente elektrisch leitfähige Schicht (10) befindet.

In einer weiteren bevorzugten Ausführungsform befindet sich das Schichtpaket aus einer ersten Schicht mit einer Brechzahl im Bereich von 1,20 bis 1,37 (8) und einer zweiten glatten Schicht mit einer Brechzahl im Bereich von 1,40 bis 1,48 (9) auf der einen Oberfläche des flächigen Substrates (7), während auf der gegenüberliegenden Oberfläche des Substrates ein mehrtägiges Antireflex-Schichtsystem (11) aufgebracht ist, welches sich abwechselnde Schichten mit hoher (n $\geq$ 1,8) und niedriger (n < 1,8) Brechzahl umfasst.

Es ist besonders vorteilhaft, wenn sich auf dieser mehrlagigen Antireflexschicht eine transparente elektrisch leitfähige Beschichtung (10) aus den vorab beschriebenen Materialien befindet. Diese besonders bevorzugte Ausführungsform ist in Figur 11 dargestellt.

Solche mehrlagigen Antireflex-Schichtsysteme (11) sind aus dem Stand der Technik hinreichend bekannt.

Als Materialien mit hoher Brechzahl werden insbesondere dielektrische Materialien wie $TiO_2$, $ZrO_2$, $SnO_2$, SiO, $In_2O_3$, $Nb_2O_5$, Oxide der seltenen Erdmetalle sowie Mischoxide dieser mit den vorab genannten Materialien, und als Materialien mit niedriger Brechzahl dielektrische Materialien wie $SiO_2$, $Al_2O_3$ oder deren Mischoxide mit Oxiden der seltenen Erdmetalle, oder $MgF_2$ eingesetzt.

Die vorab beschriebenen Ausführungsformen der Erfindung können, je nach Art ihrer Verwendung, noch mit weiteren Schichten versehen sein oder aber mit anderen Schichtsystemen in Kombination verwendet werden. Dabei sind die Materialien für die weiteren Schichten und Schichtsysteme nur insofern limitiert, als dass sie die reflexionsvermindernden Eigenschaften des erfindungsgemäßen optischen Schichtsystems nicht beeinträchtigen dürfen.

Gemäß der vorliegenden Erfindung umfasst das optische Schichtsystem auf mindestens einer Seite eines transparenten flächigen Substrates eine erste Schicht mit einer Brechzahl im Bereich von 1,20 bis 1,37. Insbesondere weist diese Schicht eine Brechzahl im Bereich von 1,22 bis 1,30 auf.

Die Schicht ist in einer Dicke von vorzugsweise 50 bis 130 nm, insbesondere von 70 bis 90 nm, auf dem Substrat vorhanden.

Als Material für diese Schicht eignet sich jedes Material, mit dem der genannte Brechzahlbereich eingestellt werden kann.

Insbesondere ist als Material für diese Schicht $SiO_2$ geeignet. Um eine Brechzahl im angegebenen Bereich erhalten zu können, liegt das $SiO_2$ bevorzugt in einer porösen Schicht vor. Eine poröse Schicht mit einer Brechzahl im Bereich von 1,20 bis 1,37 lässt sich beispielsweise auf einfache Art erhalten, wenn sie aus einem Hybridsol gemäß WO 03/027015 hergestellt wird. Daher ist ein Hybridsol gemäß WO 03/027015, auf welche hier vollinhaltlich Bezug genommen wird, ein bevorzugtes Ausgangsmaterial zur Herstellung einer porösen $SiO_2$-Schicht mit einer Brechzahl im Bereich von 1,20 bis 1,37.

Wenn die Schicht mit einer Brechzahl im Bereich von 1,20 bis 1,37 aus einer porösen $SiO_2$-Schicht besteht, weist sie eine raue Oberfläche und in der Regel feine Risse auf.

Das erfindungsgemäße optische Schichtsystem umfaßt außerdem auf der Oberfläche der ersten Schicht mit einer Brechzahl von 1,20 bis 1,37 eine zweite glatte Schicht mit einer Brechzahl im Bereich von 1,40 bis 1,48. Bevorzugt weist diese zweite Schicht eine Brechzahl im Bereich von 1,40 bis 1,46 auf.

Die Schichtdicke der glatten Schicht beträgt vorzugsweise 5 bis 30 nm und besonders bevorzugt 10 bis 20 nm.

Das Material für diese Schicht ist nicht limitiert. Jedes Material, mit dem sich der genannte Brechzahlbereich einstellen läßt, kann prinzipiell verwendet werden. Bevorzugt wird jedoch $SiO_2$ eingesetzt.

Eine $SiO_2$-Schicht mit einer Brechzahl von 1,40 bis 1,48 weist eine deutlich geringere Porosität als eine $SiO_2$-Schicht mit einer Brechzahl von 1,20 bis 1,37 auf und besitzt eine glatte Oberfläche ohne Risse und im wesentlichen ohne störende Unebenheiten.

Bestehen in einer besonders bevorzugten Ausführungsform sowohl die erste Schicht mit einer Brechzahl im Bereich von 1,20 bis 1,37 als auch die zweite glatte Schicht mit einer Brechzahl im Bereich von 1,40 bis 1,48 aus $SiO_2$, so hat sich überraschend herausgestellt, dass die Poren und Risse, welche an der Oberfläche der ersten, dickeren Schicht vorhanden sind, sich trotz Materialidentität nicht auf die zweite, glatte Schicht, welche über eine wesentlich geringere Dicke verfügt, übertragen. Diese zweite, glatte Schicht verleiht somit dem gesamten optischen Schichtsystem eine glatte Oberfläche, welche das Aufbringen nachfolgender dünner, homogener und glatter Schichten merklich erleichtert. Insbesondere hat sich herausgestellt, dass eine auf die zweite, glatte Schicht aufgebrachte transparente elektrisch leitfähige Schicht aus den vorab genannten Materialien so glatt aufgebracht werden kann, dass sie in ihrer Anwendung, beispielsweise in Touch Panels, einen gleichmäßigen, stabilen elektrischen Schichtwiderstand aufweist, welcher im Vergleichsversuch mit lediglich einer porösen $SiO_2$-Schicht auf einem transparenten flächigen Substrat, auf welcher sich direkt die transparente leitfähige Schicht befindet, nicht erzielt werden konnte. Die Anforderungen an das optische Schichtsystem einschließlich einer zusätzlich darauf aufgebrachten transparenten elektrisch leitfähigen Schicht, nämlich bei der Verwendung von Glassubstraten eine Erhöhung der Transparenz je Grenzfläche des Glases von mehr als 2 und vorzugsweise mehr als 3% zu erzielen, können mit dem erfindungsgemäßen optischen Schichtsystem ebenso erfüllt werden. Gleichzeitig ist eine ausreichende Beständigkeit in Säuren und Laugen zu beobachten. Außerdem lässt sich das erfindungsgemäße optische Schichtsystem auf einfache Art und Weise herstellen.

Erfindungsgemäß wird das vorab beschriebene optische Schichtsystem durch ein Verfahren hergestellt, welches die folgenden Schritte umfaßt:

a) Beschichten eines transparenten flächigen Substrates, welches zwei im wesentlichen parallel zueinander liegende Oberflächen aufweist, mit einer Schicht mit einer Brechzahl im Bereich von 1,20 bis 1,37 und

b) Beschichten dieser Schicht mit einer glatten Schicht mit einer Brechzahl im Bereich von 1,40 bis 1,48

auf mindestens einer der Oberflächen des Substrates.

Als Substrate kommen die vorab bereits beschriebenen Substrate in Frage. Bevorzugt wird flexibles oder unflexibles Glas als Substrat eingesetzt. Es können jedoch auch die ebenfalls beschriebenen flexiblen oder unflexiblen Kunststoffsubstrate verwendet werden.

Die transparenten flächigen Substrate werden entweder nur auf einer oder aber auf beiden Oberflächen mit einer Beschichtung gemäß den Verfahrensschritten a) und b) versehen.

Es ist jedoch auch möglich, auf einer der Oberflächen die Verfahrensschritte a) und b) auszuführen, während auf der gegenüberliegenden Oberfläche nur jeweils der Schritt a) oder der Schritt b) ausgeführt wird. Dabei ist es vorteilhaft, wenn die Verfahrensschritte a) und/oder b) jeweils gleichzeitig auf beiden Oberflächen ausgeführt werden. Vorzugsweise wird anschließend auf mindestens eine der im Schritt b) aufgebrachten Schichten noch eine transparente elektrisch leitfähige Schicht aufgebracht. Für den Fall, dass das transparente flächige Substrat auf einer der Oberflächen mittels der Verfahrenschritte a) und b), auf der anderen Oberfläche jedoch lediglich mittels des Verfahrensschrittes a) beschichtet wurde, kann auch die über den Verfahrensschritt a) erhaltene Beschichtung mit einer transparenten elektrisch leitfähigen Schicht versehen werden.

In einer weiteren Ausführungsform werden auf einer der Oberflächen des flächigen transparenten Substrates die beiden Schichten gemäß den Verfahrensschritten a) und b) aufgebracht, während auf der gegenüberliegenden Substratoberfläche entweder eine transparente elektrisch leitfähige Schicht oder ein herkömmliches mehrlagiges Antireflex-Schichtsystem, welches sich abwechselnde Schichten mit hoher (n ≥ 1,8) und niedriger (n < 1,8) Brechzahl umfaßt, aufgebracht wird.

Vorzugsweise wird im Falle der Beschichtung der dem Schichtpaket gegenüberliegenden Substratoberfläche mit einem herkömmlichen mehrlagigen Antireflex-Schichtsystem das letztere noch zusätzlich mit einer transparenten elektrisch leitfähigen Schicht beschichtet.

Die hierfür eingesetzten Materialien entsprechen dabei den bereits vorab genannten Schichtmaterialien für transparente elektrisch leitfähige Schichten sowie für hoch und niedrig brechende Schichten.

In diesem Falle erfolgt das Aufbringen der transparenten elektrisch leitfähigen Schicht oder des mehrlagigen Antireflex-Schichtsystems vorteilhafterweise über aus dem Stand der Technik bekannte Verdampfungstechniken wie Sputtern, CVD, PVD, Elektronenstrahlverdampfen, Ionenplattieren und dergleichen. Das mehrlagige Antireflex-Schichtsystem kann jedoch auch über ein Wirbelverfahren (spin coating), ein Walzenauftragsverfahren (roller coating), ein Druckverfahren oder dergleichen auf das Substrat aufgebracht werden aufgebracht werden, wobei die einzelnen Schichtmaterialien über ein naßchemisches Verfahren wie z. B. ein Sol-Gel-Verfahren hergestellt werden. In diesem Falle müssen aber zusätzliche Maßnahmen getroffen werden, um die gegenüberliegende Oberfläche des Substrates vor Verunreinigungen durch die flüssigen Schichtmaterialien zu schützen.

Es ist selbstverständlich, dass darüber hinaus noch auf jeder Oberfläche des wie vorab beschriebenen beschichteten flächigen Substrates noch beliebige weitere Schichten aufgebracht werden können, welche je nach Verwendungszweck des erfindungsgemäßen optischen Schichtsystems ausgewählt werden.

Bevorzugt ist eine Ausführungsform der vorliegenden Erfindung, bei welcher das flächige Substrat auf mindestens einer seiner Oberflächen mit einem Schichtpaket gemäß den Verfahrensschritten a) und b) sowie anschließend mit einer transparenten elektrisch leitfähigen Schicht beschichtet wird, wobei die letztere ganz bevorzugt Indium-Zinn-Oxid enthält.

In einer weiteren, besonders bevorzugten Ausführungsform wird das flächige Substrat auf einer seiner Oberflächen mit einem Schichtpaket gemäß den Verfahrensschritten a) und b) und auf der gegenüber liegenden Oberfläche mit einem herkömmlichen mehrlagigen Antireflex-Schichtsystem aus den vorab genannten Materialien sowie anschließend mit einer mit einer transparenten elektrisch leitfähigen Schicht auf dem Antireflex-Schichtsystem beschichtet, wobei die elektrisch leitfähige Schicht ganz bevorzugt Indium-Zinn-Oxid enthält.

Erfindungsgemäß wird im Verfahrensschritt a) mindestens eine Oberfläche eines transparenten flächigen Substrates mit einer Schicht mit einer Brechzahl im Bereich von 1,20 bis 1,37, vorzugsweise von 1,22 bis 1,30, beschichtet.

Da Brechzahlen im Bereich von 1,20 bis 1,37 mit dichten Einfachschichten aus den gängigen Beschichtungsmaterialien kaum erhalten werden können, wird im Verfahrensschritt a) vorzugsweise eine poröse Schicht aufgebracht, welche bevorzugt aus $SiO_2$ besteht.

Die Herstellung solcher poröser $SiO_2$-Schichten ist bekannt.

So können zum Beispiel die in DE 198 28 231 oder in DE 100 51 725 beschriebenen Sole als Ausgangssubstanzen zur Beschichtung des Substrates mit einer Schicht mit einer Brechzahl im Bereich von 1,20 bis 1,37 verwendet werden.

Wie bereits vorab beschrieben wird zur Herstellung der erfindungsgemäßen ersten Schicht gemäß Verfahrensschritt a) jedoch vorzugsweise ein Hybridsol eingesetzt, welches in WO 03/027015 ausführlich beschrieben ist.

Dieses Hybridsol, welches $[SiO_x(OH)_y]_n$ -Partikel mit $0<y<4$ und $0<x<2$, enthält, die ein Gemisch aus einer Partikelfraktion mit einer Teilchengröße von 4-15 nm und einer zweiten Partikelfraktion mit einer mittleren Teilchengröße von 20-60 nm in einem wasserhaltigen Lösemittel umfassen, wird durch hydrolytische Polykondensation von Tetraalkoxysilanen in einem wäßrigen, Lösemittel enthaltenden Medium, wobei Siliziumoxid-Hydroxid-Partikel mit einer Teilchengröße von 4-15 nm erhalten werden, unter Zusatz eines monodispersen Silizium-Hydroxid-Sols mit einer mittleren Teilchengröße von 20 bis 60 nm und einer Standardabweichung von höchstens 20% zu einem bestimmten Zeitpunkt nach Beginn der hydrolytischen Polykondensation hergestellt.

Durch Auftragen dieses Hybridsols auf Glas läßt sich eine weitgehend abriebstabile, optisch transparente $SiO_2$-Schicht mit einer Brechzahl im Bereich von 1,20 bis 1,40 auf einfache Art und Weise herstellen.

Solche im naßchemischen Verfahren aus Sol-Gel-Prozessen gewonnenen Beschichtungslösungen werden auf die präparierten, d.h. gereinigten, ggf. mit den üblichen Methoden vorbehandelten und getrockneten, Substrate aufgebracht. Als Verfahren für die Aufbringung der Schichten kommen dabei bekannte Verfahren wie die Tauchbeschichtung (dip coating), Wirbelverfahren (spin-coating), Walzenauftragsverfahren (roller coating), Druckverfahren wie z. B. Siebdruckverfahren, Gießverfahren wie z.B. Vorhanggießen (flow coating) oder das so genannte Meniscus Coating in Betracht.

Als einfachstes dieser Verfahren wird vorteilhafterweise das Tauchbeschichten eingesetzt. Dies ist insbesondere dann als Beschichtungsverfahren sehr geeignet, wenn gleichzeitig beide Oberflächen des Substrates mit einer Schicht entsprechend dem Verfahrensschritt a) beschichtet werden sollen. Werden jedoch besondere Maßnahmen zum Schutz der zweiten Schicht getroffen, beispielsweise durch Aneinanderfügen zweier Substrate, kann auch mittels eines Tauchbeschichtungsverfahrens nur eine einzige Oberfläche eines Substrates beschichtet werden.

Dabei müssen in Abhängigkeit von der gewünschten Schichtdicke die Viskosität der Beschichtungslösung und die Parameter des Beschichtungsvorganges, wie beispielsweise die Eintauch- und Ziehgeschwindigkeit der zu beschichtenden Substrate, aufeinander abgestimmt werden. So liegen die gängigen Ziehgeschwindigkeiten bei Tauchverfahren im allgemeinen zwischen 0,5 und 70 cm/min.

Alle anderen vorab beschriebenen Auftragsverfahren eignen sich sowohl für das einseitige wie auch das beidseitige Aufbringen von flüssigen Schichten gemäß dem Verfahrensschritt a).

Nach dem Aufbringen einer derartigen porösen Schicht wird diese nach Bedarf gegebenenfalls getrocknet und/oder gehärtet. Dabei muß die Schicht so gehärtet werden, dass ein Sintern vermieden wird. Die üblichen Härtetemperaturen liegen daher bei den üblichen porösen $SiO_2$-Beschichtungen unterhalb von etwa 550°C, da oberhalb dieser Temperatur der Sinterprozeß gewöhnlich einsetzt. Poröse $SiO_2$-Schichten, welche aus dem oben beschriebenen Hybridsol hergestellt werden, können unter bestimmten Bedingungen auch Temperaturen von über 700 °C ausgesetzt werden, ohne dabei zu sintern.

Nach dem gegebenenfalls Trocknen und/oder Härten der ersten Schicht mit einer Brechzahl im Bereich von 1,20 bis 1,37 auf dem Substrat wird diese mit einer zweiten Schicht gemäß Verfahrensschritt b) beschichtet.

Das Aufbringen einer porösen $SiO_2$-Schicht kann jedoch auch über ein Ätzverfahren erfolgen.

Dabei kann beispielsweise aus Gläsern, die eine Phasenseparation in der Matrix aufweisen, eine Phase mit einem Ätzmittel aus der Matrix herausgelöst werden, wie es in US 4019884 beschrieben ist.

Es kann jedoch auch, wie beispielsweise in US 4,535,026 offenbart, eine flüssige Beschichtungslösung mittels eines naßchemischen Verfahrens gewonnen, auf ein Substrat mittels der vorab beschriebenen bekannten Verfahren wie Tauchbeschichtung etc. aufgetragen und anschließend über ein Ätzverfahren eine poröse Schicht erzeugt werden.

Ebenso können über bekannte Verdampfungsverfahren wie z. B. Sputtern, CVD oder PVD $SiO_2$-Schichten auf ein Substrat aufgebracht und anschließend zur Erzeugung einer höheren Porosität gegebenenfalls ebenfalls geätzt werden.

Nach dem Ätzvorgang werden die so beschichteten Substrate wie üblich nachbehandelt, d.h. gegebenenfalls gewaschen und/oder getrocknet. Anschließend kann eine Beschichtung gemäß Verfahrensschritt b) der vorliegenden Erfindung erfolgen.

Das Aufbringen der Schicht mit einer Brechzahl im Bereich von 1,20 bis 1,37 gemäß Verfahrensschritt a) erfolgt bevorzugt mittels einer im naßchemischen Sol-Gel-Verfahren hergestellten Beschichtungslösung über die bereits beschriebenen Verfahren.

Die trockene und gegebenenfalls gehärtete Schicht weist bevorzugt eine Trockenschichtdicke von 50 bis 130 nm und insbesondere von 70 bis 90 nm auf.

Als zweite Schicht wird auf die im Schritt a) aufgebrachte Beschichtung eine Schicht aufgebracht, welche eine Brechzahl im Bereich von 1,40 bis 1,48, vorzugsweise von 1,40 bis 1,46, aufweist.

Diese Schicht ist glatt und weist an ihrer Oberfläche weder Risse noch störende Unebenheiten auf. Außerdem besitzt sie eine weitaus geringere Porosität als die im Verfahrensschritt a) aufgebrachte erste Schicht.

Bevorzugt wird die zweite, im Verfahrenschritt b) aufgebrachte Schicht aus $SiO_2$ hergestellt.

Dabei wird vorzugsweise ein aus metallischem Silizium, SiO, $SiO_2$ oder organischen Siliziumverbindungen bestehendes Beschichtungsmaterial mittels eines aus dem Stand der Technik bekannten Verdampfungsverfahrens, wie beispielsweise eines Sputterverfahrens, eines CVD- oder PVD-Verfahrens oder dergleichen auf der ersten Schicht aufgetragen. Die so entstandene $SiO_2$-Schicht ist glatt und weist eine Brechzahl im Bereich von 1,40 bis 1,48 und insbesondere von 1,40 bis 1,46, auf.

Diese zweite Schicht kann jedoch auch erhalten werden, indem die im Schritt a) aufgebrachte erste Schicht verdichtet wird. Dieses Verfahren wird vorzugsweise dann ausgeführt, wenn sowohl die erste als auch die zweite Schicht auf dem Substrat aus dem gleichen Material und insbesondere beide Schichten aus $SiO_2$ bestehen.

Das Verdichten der ersten porösen $SiO_2$-Schicht erfolgt dabei über das Auftragen einer silanhaltigen Beschichtungslösung auf die Oberfläche dieser $SiO_2$-Schicht. Das Auftragen kann dabei über die bereits vorab beschriebenen Verfahren wie Tauchbeschichten, Wirbelauftrag, Walzenauftrag, Bedrucken, Vorhanggießen, Meniscus Coating oder dergleichen erfolgen. Die silanhaltige Beschichtungslösung dringt dabei in die Poren und Risse auf der Oberfläche der ersten Schicht ein und füllt diese aus. Gleichzeitig wird die gesamte Oberfläche mit einer sehr dünnen Schicht aus der Beschichtungslösung überzogen, welche nach dem Trocknen keine Poren und/oder Risse aufweist.

Als silanhaltige Beschichtungslösung wird hierbei vorzugsweise eine Mischung aus Orthokieselsäureethylester und Lösemittel, welche Wasser enthält und mit Säure stabilisiert ist, eingesetzt. Die in dieser Beschichtungslösung enthaltenen $SiO_2$-Oligomeren weisen in der Regel eine geringe mittlere Partikelgröße auf. Diese liegt vorteilhafterweise im Bereich von etwa 2 bis etwa 10 nm und beträgt insbesondere etwa 5 nm.

Beim Verdichten der Oberfläche der porösen ersten Schicht wird auf deren Oberfläche ebenso eine glatte Schicht erhalten, welche eine Brechzahl im Bereich von 1,40 bis 1,48 und insbesondere von 1,40 bis 1,46, aufweist.

Unabhängig von der Art des Beschichtungsverfahrens im Verfahrensschritt b) wird die Trockenschichtdicke der zweiten Schicht so eingestellt, dass sie vorzugsweise im Bereich von 5 bis 30 nm, und insbesondere im Bereich von 10 bis 20 nm liegt.
Wird diese Schicht über das Verdichten der ersten porösen Schicht erhalten, so ist ihre Schichtdicke bei der Aufbringung der ersten Schicht insoweit zu beachten, als das dort gegebenenfalls eine um die Eindringtiefe der silanhaltigen Schicht erhöhte Trockenschichtdicke aufgebracht werden muß.

Nach dem Auftragen der silanhaltigen Beschichtungslösung auf die Oberfläche der ersten, porösen Schicht wird die erhaltene Beschichtung gegebenenfalls getrocknet und/oder gehärtet.

Das erfindungsgemäße optische Schichtsystem kann nachfolgend je nach Bedarf und Anwendungsgebiet mit weiteren Schichten beschichtet werden. So ist es insbesondere vorteilhaft, wenn auf der oberen, glatten Schicht eine transparente elektrisch leitfähige Schicht aus den bereits vorab beschriebenen Materialien aufgebracht wird. Bedingt durch die glatte Oberfläche des erfindungsgemäßen optischen Schichtsystems kann auch die darauffolgende Schicht mit gleichmäßiger Schichtdicke aufgebracht werden. Darüber hinaus weist sie einen vollflächigen Kontakt zur darunter liegenden oberen Schicht des erfindungsgemäßen optischen Schichtsystems auf. Dies führt zu einem stabilen elektrischen Schichtwiderstand der transparenten elektrisch leitfähigen Schicht, welcher sich insbesondere bei der Anwendung in Touch Panels als besonders vorteilhaft erweist. Bei Aufbringung des Schichtpaketes auf beiden Oberflächen eines Glassubstrates und nachfolgender Beschichtung von einer der Oberflächen mit einer transparenten elektrisch leitfähigen Schicht können auch die geforderten Transmissionswerte des gesamten Schichtsystems einschließlich der elektrisch leitfähigen Schicht von mindestens 96% (über das gesamte sichtbare Spektrum integriert und gewichtet) erreicht werden. Außerdem verhält sich das optische Schichtsystem gemäß der vorliegenden Erfindung hinsichtlich seiner Transmissionskurve wie ein Einschichtsystem. So liegt eine gleichmäßig hohe Transmission über einen breiten Wellenlängenbereich und keine ausgeprägte "V" oder "W"- Form der Transmissionskurve vor.

Aus diesem Grunde sind die erfindungsgemäßen optischen Schichtsysteme zur Anwendung in modernsten Display-Systemen, insbesondere für berührungsempfindliche Displays und ganz besonders für Touch Panels in Kombination mit hoch auflösenden farbigen Flat Panel Displays, hervorragend geeignet.

Das optische Schichtsystem gemäß der vorliegenden Erfindung lässt sich jedoch ebenfalls vorteilhaft für die Herstellung von Antireflex-Beschichtungen auf Gläsern und Kunststoffen für Fensterscheiben, transparente Gebäude- und Fahrzeugteile, Vitrinenverglasungen, optische Linsen, Displays im allgemeinen sowie zur Herstellung brechzahlmodifizierter transparenter elektrisch leitfähiger Schichten, insbesondere zur Herstellung von so genannten Index-Matched-ITO (IMITO)-Schichten, verwenden.

Figur 1 zeigt die schematische Darstellung eines üblichen berührungsempfindlichen Displays (Touch Panels) ohne das erfindungsgemäße optische Schichtsystem mit Antireflexeigenschaften.

Die Figuren 2 bis 11 stellen verschiedene Ausführungsformen der vorliegenden Erfindung dar.

Die vorliegende Erfindung soll durch die nachfolgenden Beispiele erläutert werden, ohne sie darauf zu beschränken.

Beispiel 1:

Eine Floatglasscheibe mit einer Größe von 350 x 400 mm und einer Dicke von 1,8 mm wird zunächst mit einer wässrigen Ceroxid-Schlämme und anschließend mit einem alkalischen Detergens gereinigt. Eine Hybridsol-Beschichtungslösung gemäß WO 03/027015 mit einem Gehalt an 0,9 Gew.% $SiO_2$ wird mittels eines Tauchbeschichtungsverfahrens beidseitig mit einer Ziehgeschwindigkeit von etwa 20 cm/min auf das Substrat aufgebracht. Die erhaltene Schicht wird im Umluftofen bei 550°C 10 Minuten gehärtet. Die entstandene Schicht ist porös und weist eine Trockenschichtdicke von etwa 100 nm auf. Das auf diese Weise beschichtete Glassubstrat wird in einer Glaswaschmaschine gereinigt und anschließend beidseitig über ein Sputterverfahren mit einer $SiO_2$-Schicht in einer Schichtdicke von je 15 nm beschichtet. Auf einer der Substratoberflächen wird anschließend noch eine 10 nm dicke Schicht aus Indium-Zinn-Oxid aufgesputtert.

Beispiel 2:

Eine Floatglasscheibe mit einer Größe von 350 x 400 mm und einer Dicke von 1,8 mm wird bei 95°C mit einem alkalischen Detergens gereinigt. Eine Hybridsol-Beschichtungslösung gemäß WO 03/027015 mit einem Gehalt an 1,6 Gew.% $SiO_2$ wird mittels eines Tauchbeschichtungsverfahrens beidseitig mit einer Ziehgeschwindigkeit von etwa 7 cm/min auf das Substrat aufgebracht. Die erhaltene Schicht wird im Umluftofen bei 550°C 10 Minuten gehärtet. Die entstandene Schicht ist porös und weist eine Trockenschichtdicke von etwa 70 nm auf. Das auf diese Weise beschichtete Substrat wird anschließend einem zweiten Tauchvorgang unterzogen.
Die zweite Beschichtungslösung setzt sich dabei aus einer Lösung aus Orthokieselsäuretetraethylester, Ethanol, n-Butanol, n-Butylacetat, Salpetersäure und Wasser im Gemisch mit 2-Propanol zusammen. Die Ziehgeschwindigkeit liegt bei 4 cm/min. Die Beschichtung wird 10 Minuten bei 100°C getrocknet und 60 Minuten bei 500°C im Umluftofen gehärtet. Eine Seite des auf diese Weise beschichteten Substrates wird über ein Verdampfungsverfahren mit einer 9 nm dicken Schicht aus Indium-Zinn-Oxid beschichtet. Diese Schicht wird 60 Minuten einer Temperaturbehandlung bei 400°C unterzogen.

Beispiel 3:

Eine Floatglasscheibe mit einer Größe von 350 x 400 mm und einer Dicke von 1,8 mm wird bei 95°C mit einem alkalischen Detergens gereinigt. Jeweils zwei dieser gereinigten Scheiben werden vollflächig eng miteinander verbunden. Die Scheiben werden mit einem Hybridsol analog Beispiel 1 beschichtet. Die Scheiben werden getrennt und bei 550 °C 10 Minuten im Umluftofen gehärtet. Dabei wird eine poröse $SiO_2$-Schicht mit einer Trockenschichtdicke von je etwa 100 nm auf je einer Seite der Glassubstrate erhalten. Auf dieser porösen Schicht wird jeweils eine $SiO_2$-Schicht von 15 nm Dicke aufgesputtert. Die unbeschichtete Seite des Glassubstrates wird jeweils mittels eines Verdampfungsverfahrens mit einer 9 nm dicken Schicht aus Indium-Zinn-Oxid beschichtet. Diese Schicht wird 60 Minuten einer Temperaturbehandlung bei 400°C unterzogen.

Beispiel 4

Eine Floatglasscheibe mit einer Größe von 350 x 400 mm und einer Dicke von 1,8 mm wird in einer gebräuchlichen Horizontal-Glaswaschmaschinenstrasse mit einem alkalischen Detergens gereinigt. Eine $SiO_2$-haltige Hybridsol-Beschichtungslösung gemäß WO 03/027015 wird mittels eines spin-off-coating-Verfahrens einseitig auf die gereinigte Floatglasscheibe aufgebracht. Die erhaltene Schicht wird anschließend stehend in einem Bandofen bei einer maximalen Ofentemperatur von 650°C gehärtet.
Die entstandene Schicht ist porös und weist eine Trockenschichtdicke von etwa 70 nm auf. Das derart beschichtete Glassubstrat wird auf der bereits beschichteten Seite anschließend über ein Sputterverfahren mit einer $SiO_2$-Schicht in einer Schichtdicke von 20 nm beschichtet. Die unbeschichtete Seite des Glassubstrates wird mittels eines Sputterverfahrens und in allgemein gebräuchlichen Schichtdicken für eine 4-Schicht-Entspiegelung mit insgesamt 4 alternierenden Schichten aus $Nb_2O_5$ und $SiO_2$ beschichtet. Dieses 4-Schichtsystem wird anschließend mit Hilfe eines Sputterverfahrens mit einer 15 nm dicken Schicht aus Indium-Zinn-Oxid beschichtet.

Beispiel 5

Eine Floatglasscheibe mit denselben Ausmaßen wie in Beispiel 1 wird zunächst mit einem Verfahren gemäß Beispiel 4 einseitig mit zwei $SiO_2$-Schichten beschichtet, wobei anschließend anstatt eines 4-Schichtsystems auf der unbeschichteten Seite des Glassubstrates eine 15 nm dicke Schicht aus $SiO_2$ aufgesputtert

wird. Diese wird anschließend analog zu Beispiel 4 mit Hilfe eines Sputterverfahrens mit einer 15 nm dicken Schicht aus Indium-Zinn-Oxid beschichtet.

## Patentansprüche

1. Optisches Schichtsystem mit Antireflexeigenschaften, umfassend ein transparentes flächiges Substrat mit zwei im wesentlichen parallel zueinander liegenden Oberflächen, welches auf mindestens einer dieser Oberflächen ein Schichtpaket aus einer

   - ersten Schicht mit einer Brechzahl im Bereich von 1,20 bis 1,37 auf der Substratoberfläche und
   - einer zweiten glatten Schicht mit einer Brechzahl von 1,40 bis 1,48 auf der ersten Schicht

   aufweist.

2. Optisches Schichtsystem gemäß Anspruch 1, wobei das Schichtpaket auf beiden Oberflächen des Substrates vorhanden ist.

3. Optisches Schichtsystem gemäß Anspruch 1, wobei eine Oberfläche des Substrates das Schichtpaket aufweist und sich auf der zweiten Substratoberfläche eine Schicht mit einer Brechzahl im Bereich von 1,20 bis 1,37 oder eine glatte Schicht mit einer Brechzahl von 1,40 bis 1,48 befindet.

4. Optisches Schichtsystem gemäß Anspruch 1, wobei eine Oberfläche des Substrates das Schichtpaket aufweist und sich auf der zweiten Substratoberfläche eine elektrisch leitfähige Schicht befindet.

5. Optisches Schichtsystem gemäß Anspruch 1, wobei mindestens eine Oberfläche des Substrates das Schichtpaket aufweist und sich auf mindestens einer der oberen glatten Schichten des Schichtpaketes eine elektrisch leitfähige Schicht befindet.

6. Optisches Schichtsystem gemäß Anspruch 1, wobei eine Oberfläche des Substrates das Schichtpaket aufweist und sich auf der zweiten Substratoberfläche ein mehrlagiges Antireflex-Schichtsystem befindet, welches sich abwechselnde Schichten mit hoher ($n \geq 1,8$) und niedriger ($n < 1,8$) Brechzahl umfasst.

7. Optisches Schichtsystem gemäß Anspruch 6, wobei sich auf dem mehrlagigen Antireflex-Schichtsystem zusätzlich eine elektrisch leitfähige Schicht befindet.

8. Optisches Schichtsystem gemäß Anspruch 6 und 7, wobei die Schichten mit hoher Brechzahl aus

$TiO_2$, $ZrO_2$, $SnO_2$, $SiO$, $In_2O_3$, $Nb_2O_5$, Oxiden der seltenen Erdmetalle sowie deren Mischoxiden mit den vorab genannten Oxiden und die Schichten mit niedriger Brechzahl aus $SiO_2$, $Al_2O_3$, deren Mischoxiden mit Oxiden der seltenen Erdmetalle, oder $MgF_2$ zusammengesetzt sind.

9. Optisches Schichtsystem gemäß Anspruch 3, wobei sich auf dem Schichtpaket, auf der glatten Schicht mit einer Brechzahl von 1,40 bis 1,48 oder auf der Schicht mit einer Brechzahl im Bereich von 1,20 bis 1,37 eine elektrisch leitfähige Schicht befindet.

10. Optisches Schichtsystem gemäß den Ansprüchen 4, 5, 7 und 9, wobei die elektrisch leitfähige Schicht transparent ist und Indium-Zinn-Oxid, Indiumoxid, Antimon-dotiertes Zinnoxid, Fluor-dotiertes Zinnoxid, Zinkoxid, Indium-dotiertes Zinkoxid, Cadmiumstannat, Aluminiumdotiertes Zinkoxid oder Mischungen daraus enthält.

11. Optisches Schichtsystem gemäß einem der Ansprüche 1 bis 10, wobei das transparente flächige Substrat aus flexiblem oder unflexiblem Glas oder einem flexiblen oder unflexiblen Kunststoff besteht.

12. Optisches Schichtsystem gemäß einem oder mehreren der Ansprüche 1 bis 11, wobei die Schicht mit einer Brechzahl im Bereich von 1,20 bis 1,37 eine Schichtdicke von 50-130 nm aufweist.

13. Optisches Schichtsystem gemäß einem oder mehreren der Ansprüche 1 bis 12, wobei die glatte Schicht mit einer Brechzahl im Bereich von 1,40 bis 1,48 eine Schichtdicke von 5-30 nm aufweist.

14. Optisches Schichtsystem gemäß einem oder mehreren der Ansprüche 1 bis 13, wobei die Schicht mit einer Brechzahl im Bereich von 1,20 bis 1,37 aus $SiO_2$ besteht.

15. Optisches Schichtsystem gemäß einem oder mehreren der Ansprüche 1 bis 14, wobei die glatte Schicht mit einer Brechzahl im Bereich von 1,40 bis 1,48 aus $SiO_2$ besteht.

16. Optisches Schichtsystem gemäß einem oder mehreren der Ansprüche 1 bis 15, wobei die Schicht mit einer Brechzahl im Bereich von 1,20 bis 1,37 porös ist.

17. Optisches Schichtsystem gemäß einem oder mehreren der Ansprüche 1 bis 16, wobei die glatte Schicht mit einer Brechzahl im Bereich von 1,40 bis 1,48 eine geringere Porosität aufweist als die Schicht mit einer Brechzahl im Bereich von 1,20 bis 1,37.

18. Verfahren zur Herstellung eines optischen Schichtsystems gemäß den Ansprüchen 1 bis 17, umfassend die Schritte

a) Beschichten eines transparenten flächigen Substrates, welches zwei im wesentlichen parallel zueinander liegende Oberflächen aufweist, mit einer Schicht mit einer Brechzahl im Bereich von 1,20 bis 1,37 und
b) Beschichten dieser Schicht mit einer glatten Schicht mit einer Brechzahl im Bereich von 1,40 bis 1,48

auf mindestens einer der Oberflächen des Substrates.

19. Verfahren gemäß Anspruch 18, wobei im Schritt a) eine $SiO_2$-Schicht aufgebracht wird.

20. Verfahren gemäß Anspruch 18 oder 19, wobei im Schritt b) eine $SiO_2$-Schicht aufgebracht wird.

21. Verfahren gemäß den Ansprüchen 18 bis 20, wobei die Schicht mit einer Brechzahl von 1,20 bis 1,37 porös ist und mit einem Tauchverfahren, Wirbelverfahren, Walzenauftragsverfahren, Druckverfahren oder Gießverfahren aufgebracht und vor dem Beschichten gemäß Schritt b) gegebenenfalls getrocknet und/oder gehärtet wird.

22. Verfahren gemäß einem oder mehreren der Ansprüche 18 bis 20, wobei die Schicht mit einer Brechzahl von 1,20 bis 1,37 porös ist und mittels eines Tauchverfahrens, Wirbelverfahrens, Walzenauftragsverfahrens, Druckverfahrens oder Gießverfahrens oder mittels eines Verdampfungsverfahrens aufgebracht und anschließend geätzt wird, und nachfolgend gemäß Schritt b) beschichtet wird.

23. Verfahren gemäß einem oder mehreren der Ansprüche 18 bis 22, wobei die Schicht mit einer Brechzahl im Bereich von 1,40 bis 1,48 eine geringere Porosität als die Schicht aus a) aufweist und mittels eines Sputterverfahrens, eines CVD oder eines PVD-Verfahrens aufgebracht wird.

24. Verfahren gemäß einem oder mehreren der Ansprüche 18 bis 22, wobei die Schicht mit einer Brechzahl im Bereich von 1,40 bis 1,48 eine geringere Porosität als die Schicht aus a) aufweist und durch Verdichten der Oberfläche der Schicht aus a) hergestellt wird.

25. Verfahren gemäß Anspruch 24, wobei das Verdichten durch Auftragen einer silanhaltigen Schicht auf die Oberfläche der porösen Schicht sowie gegebenenfalls anschließendes Trocknen und/oder Härten erfolgt.

26. Verfahren gemäß einem oder mehreren der Ansprüche 18 bis 25, wobei beide Oberflächen des Substrates gemäß den Schritten a) und b) beschichtet werden.

27. Verfahren gemäß Anspruch 26, wobei beide Oberflächen des Substrates jeweils gleichzeitig gemäß der Schritte a) und b) beschichtet werden.

28. Verfahren gemäß einem oder mehreren der Ansprüche 18 bis 25, wobei eine Oberfläche des Substrates gemäß der Schritte a) und b) und die zweite Oberfläche gemäß der Schritte a) oder b) beschichtet wird.

29. Verfahren gemäß einem oder mehreren der Ansprüche 18 bis 25, wobei eine Oberfläche des Substrates gemäß der Schritte a) und b) und die zweite Oberfläche mit einer elektrisch leitfähigen Schicht oder einem mehrlagigen Antireflex-Schichtsystem aus sich abwechselnden Schichten mit hoher (n ≥ 1,8) und niedriger (n < 1,8) Brechzahl beschichtet wird.

30. Verfahren gemäß einem der Ansprüche 28 oder 29, wobei auf die auf die zweite Oberfläche im Schritt a) oder im Schritt b) aufgebrachte Schicht oder auf das mehrlagige Antireflex-Schichtsystem zusätzlich eine elektrisch leitfähige Schicht aufgebracht wird.

31. Verfahren gemäß einem oder mehreren der Ansprüche 18 bis 29, wobei mindestens eine Oberfläche des Substrates gemäß der Schritte a) und b) beschichtet wird und auf die obere glatte Schicht eine elektrisch leitfähige Schicht aufgebracht wird.

32. Verfahren gemäß den Ansprüchen 29 bis 31, wobei als elektrisch leitfähige Schicht eine transparente Schicht aus Indium-Zinn-Oxid, Indiumoxid, Antimon-dotiertem Zinnoxid, Fluor-dotiertem Zinnoxid, Zinkoxid, Indium-dotiertem Zinkoxid, Cadmiumstannat, Aluminiumdotiertem Zinkoxid oder Mischungen daraus aufgebracht wird.

33. Verfahren gemäß einem oder mehreren der Ansprüche 18 bis 32, wobei das Substrat ein flexibles oder unflexibles Glas oder ein flexibler oder unflexibler Kunststoff ist.

34. Verfahren gemäß einem oder mehreren der Ansprüche 18 bis 33, wobei die im Schritt a) aufgebrachte Schicht eine Trockenschichtdicke von 50-130 nm aufweist.

35. Verfahren gemäß einem oder mehreren der Ansprüche 18 bis 34, wobei die im Schritt b) aufgebrachte Schicht eine Trockenschichtdicke von 5-30 nm aufweist.

36. Verwendung der optischen Schichtsysteme gemäß einem oder mehreren der Ansprüche 1 bis 17 zur Herstellung von antireflex-beschichteten Gläsern und Kunststoffen für Fensterscheiben, transparente Gebäude- und Fahrzeugteile, Vitrinenverglasungen, optische Linsen, Displays, berührungsempfindliche Displays sowie für brechzahlmodifizierte transparente elektrisch leitfähige Schichten.

37. Verwendung gemäß Anspruch 36 in Touch Panels und für Index-Matched ITO-Schichten (IMITO).

38. Antireflex-beschichtete Gläser und Kunststoffe für Fensterscheiben, transparente Gebäude- und Fahrzeugteile, Vitrinenverglasungen, optische Linsen, Displays, berührungsempfindliche Displays sowie brechzahlmodifizierte transparente elektrisch leitfähige Schichten, enthaltend ein optisches Schichtsystem gemäß einem oder mehreren der Ansprüche 1 bis 17.

39. Antireflex-beschichtete Gläser und Kunststoffe gemäß Anspruch 38 für Touch Panels und Index-Matched ITO-Schichten (IMITO).

# Figur 1

## Figur 2

## Figur 3

## Figur 4

## Figur 5

## Figur 6

## Figur 7

## Figur 8

## Figur 9

## Figur 10

## Figur 11

Europäisches
Patentamt

**EUROPÄISCHER RECHERCHENBERICHT**

Nummer der Anmeldung

EP 04 01 6082

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 974 560 A (NIPPON SHEET GLASS CO LTD) 26. Januar 2000 (2000-01-26) * Seite 6, Zeile 43 - Seite 10, Zeile 55; Ansprüche 1-4 * | 1-4 | G02B1/11 |
| Y | EP 1 123 905 A (ITOH C FINE CHEMICAL CO ; MURAYAMA YOICHI (JP); KASHIWAGI KUNIHIRO (JP) 16. August 2001 (2001-08-16) * Seite 2, Zeile 34 - Seite 9, Zeile 18; Ansprüche 1,2,7 * | 1-7 | |
| Y | WO 00/10934 A (PPG IND OHIO INC) 2. März 2000 (2000-03-02) * Seite 4, Zeile 27 - Seite 10, Zeile 31; Ansprüche 21-28 * | 1-7 | |
| A | EP 0 798 272 A (ASAHI GLASS CO LTD) 1. Oktober 1997 (1997-10-01) * das ganze Dokument * | 1-39 | |
| A | WO 03/035780 A (MATSUSHITA ELECTRIC WORKS LTD ; ITOU NORIHIRO (JP); IDE NOBUHIRO (JP);) 1. Mai 2003 (2003-05-01) * das ganze Dokument * & EP 1 447 433 A (MATSUSHITA ELECTRIC WORKS LTD) 18. August 2004 (2004-08-18) | 1-39 | **RECHERCHIERTE SACHGEBIETE (Int.Cl.7)** G02B |

Der vorliegende Recherchenbericht wurde für alle Patentansprüche erstellt

| Recherchenort | Abschlußdatum der Recherche | Prüfer |
|---|---|---|
| München | 11. Oktober 2004 | Thieme, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

16

**ANHANG ZUM EUROPÄISCHEN RECHERCHENBERICHT**
**ÜBER DIE EUROPÄISCHE PATENTANMELDUNG NR.**　　　EP 04 01 6082

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2004

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 0974560 | A | | 26-01-2000 | EP | 0974560 | A1 | 26-01-2000 |
| | | | | US | 6251523 | B1 | 26-06-2001 |
| | | | | WO | 9929635 | A1 | 17-06-1999 |
| | | | | JP | 11292568 | A | 26-10-1999 |
| EP 1123905 | A | | 16-08-2001 | JP | 2001295032 | A | 26-10-2001 |
| | | | | EP | 1123905 | A2 | 16-08-2001 |
| | | | | US | 2002008018 | A1 | 24-01-2002 |
| WO 0010934 | A | | 02-03-2000 | AU | 5484499 | A | 14-03-2000 |
| | | | | WO | 0010934 | A1 | 02-03-2000 |
| EP 0798272 | A | | 01-10-1997 | DE | 69730259 | D1 | 23-09-2004 |
| | | | | EP | 0798272 | A1 | 01-10-1997 |
| | | | | JP | 3514065 | B2 | 31-03-2004 |
| | | | | JP | 9314715 | A | 09-12-1997 |
| | | | | US | 5871843 | A | 16-02-1999 |
| WO 03035780 | A | | 01-05-2003 | EP | 1447433 | A1 | 18-08-2004 |
| | | | | EP | 1445095 | A1 | 11-08-2004 |
| | | | | WO | 03035780 | A1 | 01-05-2003 |
| | | | | WO | 03035389 | A1 | 01-05-2003 |
| | | | | JP | 2003202960 | A | 18-07-2003 |
| | | | | JP | 2003202406 | A | 18-07-2003 |
| | | | | JP | 2003201443 | A | 18-07-2003 |
| | | | | JP | 2003216061 | A | 30-07-2003 |
| | | | | TW | 574110 | B | 01-02-2004 |
| EP 1447433 | A | | 18-08-2004 | EP | 1447433 | A1 | 18-08-2004 |
| | | | | EP | 1445095 | A1 | 11-08-2004 |
| | | | | WO | 03035780 | A1 | 01-05-2003 |
| | | | | WO | 03035389 | A1 | 01-05-2003 |
| | | | | JP | 2003202960 | A | 18-07-2003 |
| | | | | JP | 2003202406 | A | 18-07-2003 |
| | | | | JP | 2003201443 | A | 18-07-2003 |
| | | | | JP | 2003216061 | A | 30-07-2003 |
| | | | | TW | 574110 | B | 01-02-2004 |

EPO FORM P0461

Für nähere Einzelheiten zu diesem Anhang : siehe Amtsblatt des Europäischen Patentamts, Nr.12/82